(19) **Europäisches Patentamt / European Patent Office / Office européen des brevets**

(11) **EP 2 333 879 A1**

(12) **EUROPEAN PATENT APPLICATION**
published in accordance with Art. 153(4) EPC

(43) Date of publication:
**15.06.2011 Bulletin 2011/24**

(51) Int Cl.:
*H01M 4/58* (2010.01)      *H01M 4/36* (2006.01)
*H01M 4/38* (2006.01)      *H01M 4/48* (2010.01)

(21) Application number: **09817646.4**

(22) Date of filing: **14.09.2009**

(86) International application number:
**PCT/JP2009/066038**

(87) International publication number:
**WO 2010/038609 (08.04.2010 Gazette 2010/14)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.09.2008 JP 2008253251**

(71) Applicant: **Sumitomo Bakelite Co., Ltd.**
**Shinagawa-ku**
**Tokyo 140-0002 (JP)**

(72) Inventors:
• **ONO, Tetsushi**
  **Tokyo 140-0002 (JP)**
• **SASAKI, Tatsuro**
  **Tokyo 140-0002 (JP)**
• **WATANABE, Tsuyoshi**
  **Tokyo 140-0002 (JP)**

(74) Representative: **Hollatz, Christian et al**
**ter Meer Steinmeister & Partner GbR**
**Patentanwälte**
**Mauerkircherstrasse 45**
**81679 München (DE)**

(54) **CARBON MATERIAL FOR NEGATIVE ELECTRODE OF LITHIUM SECONDARY BATTERY, NEGATIVE ELECTRODE OF LITHIUM SECONDARY BATTERY, LITHIUM SECONDARY BATTERY AND METHOD FOR PRODUCING CARBON MATERIAL FOR NEGATIVE ELECTRODE OF LITHIUM SECONDARY BATTERY**

(57) The invention provides an anodic carbon material for a lithium secondary battery and a lithium secondary battery anode having excellent charge/discharge cycle characteristics, and a lithium secondary battery using the same. More specifically, an anodic carbon material for a lithium secondary battery according to the present invention comprises: composite particles composed of silicon-containing particles containing an alloy, oxide, nitride, or carbide of silicon capable of occluding and releasing lithium ions and a resinous carbon material enclosing the silicon-containing particles; and a network structure formed from nanofibers and/or nanotubes that bond to surfaces of the composite particles and that enclose the composite particles, and wherein: the network structure contains silicon.

Fig.1

COMPOSITE PARTICLE

**Description**

TECHNICAL FIELD

The present invention relates to an anodic carbon material for a lithium secondary battery, a lithium secondary battery anode, a lithium secondary battery, and a method for manufacturing the anodic carbon material for the lithium secondary battery.

BACKGROUND ART

With the widespread use of portable, cordless electronic products, the need for smaller and lighter lithium secondary batteries or for lithium secondary batteries with higher energy density has been increasing. To increase the energy density of a lithium secondary battery, employing a material such as silicon, tin, germanium, magnesium, lead, aluminum, or their oxides or alloys is common, which can be alloyed with lithium as the material for its anode. However, anodic materials expand in volume during charging as the material occludes lithium ions, and contracts in volume during discharge as it releases lithium ions. It is known that, since the volume of the anodic material changes during charge/discharge cycling, as described above, the anodic material eventually becomes comminuted and falls off the electrode, resulting in the disintegration of the anode.

Various methods and means have been studied to overcome the above problem, but the reality is that it is difficult to achieve stable charge/discharge characteristics when a metal or its oxide is used as an anodic material for a lithium secondary battery. In view of this, an anode active material prepared by applying an organic coating over the surfaces of particles of a metal that can form a lithium alloy is proposed as an anodic material for a lithium secondary battery having excellent charge/discharge cycle characteristics, as disclosed, for example, in Japanese Unexamined Patent Publication No. 2007-214137. According to the anodic material disclosed in Japanese Unexamined Patent Publication No. 2007-214137, it is stated that metal particles having an average primary particle size of 500 to 1 nm are used in order to suppress the expansion that occurs due to the occlusion of lithium ions. However, by merely reducing the primary particle size of the metal particles used, it is difficult to suppress the expansion of the metal particles occurring during charging due to the occlusion of lithium ions.

There is also proposed a novel anode active material which is characterized by the inclusion of a metal nanocrystal having a particle size of 20 nm or less and a carbon coating layer formed on the surface of the metal nanocrystal, as disclosed, for example, in Japanese Unexamined Patent Publication No. 2007-305569. According to the anodic material disclosed in Japanese Unexamined Patent Publication No. 2007-305569, a lithium secondary battery having a high capacity and an excellent capacity retention rate can be achieved. It is stated that, in order to extend the service life of the disclosed anode, the metal crystal is prepared in the form of nanoparticles and the surface of the metal crystal is coated with an organic molecule containing an alkyl group having a carbon number of 2 to 10, an arylalkyl group having a carbon number of 3 to 10, an alkylaryl group having a carbon number of 3 to 10, or an alkyoxy group having a carbon number of 2 to 10. The carbon layer formed on the surface of the metal crystal disclosed in Japanese Unexamined Patent Publication No. 2007-305569 is formed by vapor phase growth and is essentially different from the present invention.

On the other hand, providing an anode active material by mixing a metal salt with an organic material which is a source of carbon and by heating the mixture in a non-oxidizing atmosphere has been proposed, as disclosed, for example, in Japanese Unexamined Patent Publication No. H08-241715. However, the metal content of the anode active material disclosed in Japanese Unexamined Patent Publication No. H08-241715 is not higher than 40% by weight. Accordingly, the amount of occlusion of lithium ions by the metal introduced into the anode active material is small. Since the amount of occlusion is small, there is offered the advantage that the metal is less likely to expand and hence the anode is difficult to disintegrate, but with the method disclosed in Japanese Unexamined Patent Publication No. H08-241715, it is difficult to increase the capacity of the anode active material.

SUMMARY OF THE INVENTION

In any of the lithium secondary battery anodes disclosed in the above patent documents, the metal to be alloyed with lithium is coated or treated with carbon so that the volume expansion/contraction of the anode active material associated with the charge/discharge cycling is suppressed to a certain extent. However, with any of the inventions disclosed in the above patent documents, it is not possible to completely prevent the disintegration of the anode that can result from the comminution of the anode active material due to repeated charge/discharge cycles. Therefore, it cannot be said that the lithium secondary battery anode disclosed in any of the above patent documents has satisfactory charge/discharge cycle characteristics. It is accordingly an object of the present invention to provide an anodic carbon material for a lithium secondary battery, a lithium secondary battery anode, and a lithium secondary battery using the same, aiming to further improve the charge/discharge cycle characteristics of the lithium secondary battery.

The above object is achieved by the invention described in items (1) to (13) below.

(1) An anodic carbon material for a lithium secondary battery, comprising:

composite particles composed of silicon-containing particles containing an alloy, oxide, nitride, or carbide of silicon capable of occluding and releasing lithium ions and a resinous carbon material enclosing the silicon-containing particles; and
a network structure formed from nanofibers and/or nanotubes that bond to surfaces of the composite particles and that enclose the composite particles, and wherein:
the network structure contains silicon.

(2) An anodic carbon material for a lithium secondary battery as described in item (1), wherein the resinous carbon material has pores and, of the pores, pores having pore diameters of 0.25 to 0.45 nm as measured by a micropore method using a nitrogen gas adsorption process have a combined volume of 0.0001 to 1.5 cm$^3$/g.

(3) An anodic carbon material for a lithium secondary battery as described in item (2), wherein the combined volume of the pores having pore diameters of 0.25 to 0.45 nm is in the range of 0.0005 to 1.0 cm$^3$/g.

(4) An anodic carbon material for a lithium secondary battery as described in any one of items (1) to (3), wherein the resinous carbon material has pores and, of the pores, pores having pore diameters of 0.25 to 0.45 nm as measured by a micropore method using a nitrogen gas adsorption process constitute 25% or more by volume with respect to the total pore volume of the resinous carbon material.

(5) An anodic carbon material for a lithium secondary battery as described in item 4, wherein the pores having pore diameters of 0.25 to 0.45 nm constitute 30% or more by volume with respect to the total pore volume of the resinous carbon material.

(6) An anodic carbon material for a lithium secondary battery as described in any one of items (1) to (5), wherein the network structure further contains carbon.

(7) An anodic carbon material for a lithium secondary battery as described in any one of items (1) to (6), wherein the silicon-containing particles contain silicon oxide.

(8) An anodic carbon material for a lithium secondary battery as described in any one of items (1) to (7), wherein the carbon material contains the alloy, oxide, nitride, or carbide of the silicon in an amount not smaller than 5% by mass but not larger than 60% by mass.

(9) An anodic carbon material for a lithium secondary battery as described in any one of items (1) to (8), wherein the carbon material has an average particle diameter in the range of 3 μm to 15 μm.

(10) A lithium secondary battery anode comprising an anodic carbon material for a lithium secondary battery as described in any one of items (1) to (9).

(11) A lithium secondary battery comprising a lithium secondary battery anode as described in item (10).

(12) A method for manufacturing an anodic carbon material for a lithium secondary battery, comprising:

mixing silicon-containing particles containing an alloy, oxide, nitride, or carbide of silicon, capable of occluding and releasing lithium ions, into a carbon precursor, thereby forming a mixture with the silicon-containing particles dispersed in the carbon precursor; and carbonizing the mixture.

(13) A method for manufacturing an anodic carbon material for a lithium secondary battery, comprising:

mixing silicon-containing particles containing an alloy, oxide, nitride, or carbide of silicon, capable of occluding and releasing lithium ions, into a carbon precursor together with a catalyst, thereby forming a mixture with the silicon-containing particles and the catalyst dispersed in the carbon precursor; and carbonizing the mixture.

EFFECT OF THE INVENTION

According to the present invention, since provisions are made to prevent the comminution of the carbon material due to repeated charge/discharge cycles and to maintain the adhesion between the nanofibers and/or nanotubes and the composite particles thereby preventing degradation of the conductivity of the carbon material, there is provided an anodic carbon material for a lithium secondary battery that exhibits excellent charge/discharge cycle characteristics that have not been possible with the prior art.

Further, the invention provides an anodic carbon material for a lithium secondary battery with further enhanced charge/discharge cycle characteristics by controlling the pore volume of the anodic carbon material.

Furthermore, in the fabrication of the anodic carbon material for the lithium secondary battery according to the present invention, since the resinous carbon material and the nanofibers and/or nanotubes are simultaneously formed from the same carbon precursor in the carbonization process, the carbon nanofibers and/or carbon nanotubes need not be prepared in a separate process using a vapor phase method, an arc-discharge method, or a plasma method; as a result, the fabrication process can be simplified and the cost reduced.

BRIEF DESCRIPTION OF THE DRAWINGS

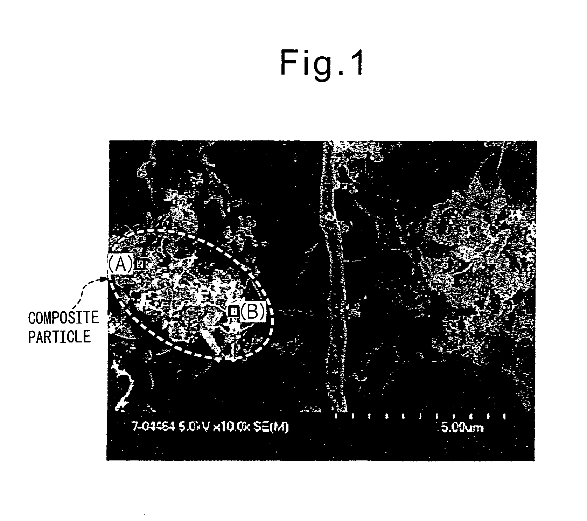

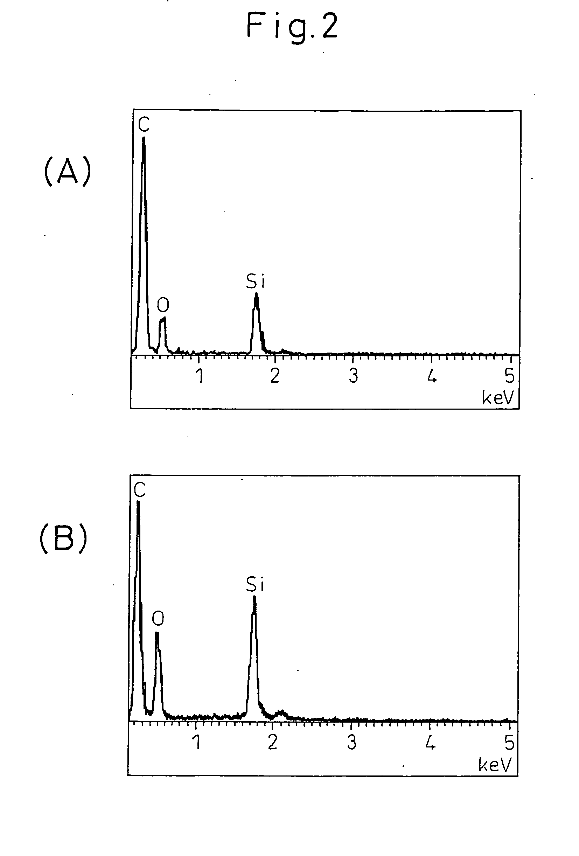

Figure 1 is a scanning electron micrograph (SEM) of a carbon material obtained in working example 1. Figures 2(A) and 2(B) are graphs showing the results of element analysis performed using an energy dispersive X-ray analyzer (EDX) by examining different portions of nanofibers observed under SEM.

MODE FOR CARRYING OUT THE INVENTION

An anodic carbon material for a lithium secondary battery according to the present invention comprises: composite particles composed of silicon-containing particles containing an alloy, oxide, nitride, or carbide of silicon capable of occluding and releasing lithium ions and a resinous carbon material enclosing the silicon-containing particles; and a network structure formed from nanofibers and/or nanotubes (hereinafter referred to as "nanofibers, etc.") that bond to surfaces of the composite particles and that enclose the composite particles, and wherein: the network structure contains silicon. The resinous carbon material and the network structure are formed by carbonizing a carbon precursor, if necessary, in the presence of a catalyst. Here, the network structure is formed apparently by using the surface of the composite particles, composed of the silicon-containing particles and the resinous carbon material, as the starting point of the structure.

While not wishing to be bound by any specific theory, it is believed that since the network structure composed of the nanofibers, etc. according to the present invention, is bonded to the surfaces of the composite particles composed of the silicon-containing particles containing an alloy, oxide, nitride, or carbide of silicon capable of occluding and releasing lithium ions and the resinous carbon material enclosing the silicon-containing particles, the network structure gets entangled with a network structure formed from other adjacent particles. This serves to enhance the adhesion between the nanofibers, etc., and the composite particles, making the nanofibers, etc., difficult to separate from the composite particles when the composite particles expand and contract in volume during charge/discharge cycling. Furthermore, since the entanglement of the adjacent network structures from the particles results in the formation of a network structure having elasticity as a whole, the conductivity of the anode as a whole is maintained despite the volume expansion/contraction of the silicon-containing particles during charge/discharge cycling. Since the conductivity of the anode is thus maintained, the change in resistance due to charge/discharge can be suppressed, achieving excellent cycle characteristics. The network structure unique to the present invention cannot be formed by just adding the carbon nanofibers, etc., formed in a separate process using a vapor phase method as in the prior art. The network structure is formed apparently by using the surface of the composite particles as the starting point but, since the network structure contains silicon, it is considered that the real starting point of the network structure is the surface of the silicon-containing particles.

The nanofibers, etc., forming the network structure according to the present invention include silicon-containing fibers whose fiber diameter is smaller than 1 $\mu$m. While it is not necessary to strictly discriminate between a nanofiber and a nanotube, the present specification specifically defines a fiber having a fiber diameter of 100 nm or greater as being a nanofiber and a fiber having a fiber diameter smaller than 100 nm as being a nanotube. From the original composition of the silicon-containing particles, it is assumed that the nanofibers, etc., according to the present invention are composed of silicon carbide, silicon nitride, silicon carbonitride, or the like, or a suitable combination thereof. The element composition of the nanofibers, etc., according to the present invention may be made uniformed throughout the nanofibers, etc., or may be varied from portion to portion. Preferably, the nanofibers, etc. forming the network structure according to the present invention include carbon nanofibers and/or carbon nanotubes (hereinafter referred to as "carbon nanofibers, etc."). It is anticipated that the presence of the carbon nanofibers, etc., will contribute to the improvement of the conductivity between the composite particles containing the silicon-containing particles.

The resinous carbon material according to the present invention has pores for permitting lithium ions to enter. Such pores provide places where, when nitrogen gas is used as a molecular probe, the nitrogen molecules can enter for adsorption in the anodic carbon material of the lithium secondary battery. The pore size (pore diameter) is preferably in the range of 0.25 to 0.45 nm. If the pore diameter is smaller than 0.25 nm, the charge capacity degrades because the entrance of lithium ions is hindered due to the shielding effect of the electron cloud of the carbon atoms in the resinous carbon material. On the other hand, if the pore diameter exceeds 0.45 nm, the initial efficiency (charge capacity/discharge capacity) drops because solvated lithium ions are captured within the pores. The above pore diameters are values measured by a micropore method (equipment used: micropore distribution analyzer "ASAP-2010" manufactured by Shimadzu Co., Ltd.).

The pore volume and the total pore volume of the resinous carbon material according to the present invention are each measured as the volume of a space where the nitrogen molecules can enter when nitrogen gas is used as a molecular probe, and are calculated in accordance with the micropore method using a nitrogen gas adsorption process. The pore volume here refers to the pore volume measured for each different pore diameter. More specifically, the pore volume is calculated for each different pore diameter from the amount of nitrogen gas adsorption measured at each different relative pressure. In the resinous carbon material according to the present invention, the pore volume of the pores having pore diameters of 0.25 to 0.45 nm is preferably in the range of 0.0001 to 1.5 cm$^3$/g, and more preferably in the range of 0.0005 to 1.0 cm$^3$/g. If the pore volume of the pores having pore diameters of 0.25 to 0.45 nm is larger than 1.5 cm$^3$/g, the electrolyte decomposition reaction in the charge/discharge cycles is accelerated, and the initial charge/discharge characteristics degrade. Such a large pore volume is also not desirable because the true density of the resinous carbon material decreases, resulting in a decrease in the energy density of the electrode. On the other hand, if the pore volume of the pores having pore diameters of 0.25 to 0.45 nm is smaller than 0.0001 cm$^3$/g, the portion through which the lithium ions can enter becomes small and the charge capacity drops, which is not desirable. Furthermore, since the resinous carbon material becomes more compacted, the expansion of the silicon-containing particles cannot be suppressed and the charge/discharge cycle characteristics degrade. The pore volume of the pores having pore diameters of 0.25 to 0.45 nm can be controlled by controlling the heat treating conditions or carbonizing conditions (temperature, heating speed, processing time, processing atmosphere, etc.) of the resinous carbon material as will be described later.

In the resinous carbon material according to the present invention, the volume of the pores having pore diameters of 0.25 to 0.45 nm is preferably not smaller than 25% by volume with respect to the total pore volume of the resinous carbon material, and more preferably not smaller than 30% by volume. The total pore volume of the resinous carbon material refers to the sum of the pore volumes calculated for each pore diameter by the micropore method from the amount of nitrogen gas adsorption at each relative pressure, per unit mass of the anodic carbon material of the lithium secondary battery.
If the volume of the pores having pore diameters of 0.25 to 0.45 nm is smaller than 25% by volume with respect to the total pore volume, sufficient charge capacity cannot be obtained, which is not desirable.

The anodic carbon material for the lithium secondary battery according to the present invention is not specifically limited in its shape, and may take any suitable particle shape such as a mass-like shape, a flake-like shape, a spherical shape, or a fiber-like shape. From the viewpoint of the charge/discharge characteristics, the average particle diameter of these carbon particles is preferably not smaller than 3 μm but not larger than 15 μm, and more preferably not smaller than 5 μm but not larger than 12 μm. Further preferably, the average particle diameter is not smaller than 7 μm but not larger than 10 μm. If the average particle diameter is larger than 15 μm, the interstices between the carbon particles become large, and if such particles are used as the anodic carbon material for the lithium secondary battery, it may not be possible to increase the density of the anode. On the other hand, if the average particle diameter is smaller than 3 μm, since the number of carbon particles per unit mass increases, the whole structure may become bulky and intractable.

In the present invention, the particle diameter is defined by calculating the particle diameter from the measured value by using the particle shape and Mie theory, and is generally known as the effective diameter.
The average particle diameter in the present invention is defined in terms of the median particle diameter D50% which represents the particle diameter of particles whose frequency of occurrence is 50% by volume as measured by a laser diffraction particle size distribution measurement method.

Examples of the silicon alloy, oxide, nitride, or carbide forming the silicon-containing particles according to the present invention include silicon monoxide (SiO), silicon nitride (Si$_2$N$_4$), silicon carbide (SiC), titanium-silicon alloy (Ti-Si), etc. Among them, SiO is preferable because the expansion coefficient during charging is lower than that of Si alone.

The average particle diameter of the silicon-containing particles according to the present invention is preferably in the range of about 0.5 μm to 5 μm. Generally, from the standpoint of achieving a high charge/discharge capacity, it is preferable to reduce the average particle diameter and thereby increase the contact area with the lithium ions. However, if the average particle diameter of the silicon-containing particles is smaller than 0.5 μm, the amount of occlusion of lithium ions becomes excessive, and it may become difficult to suppress the expansion/contraction of the silicon-containing particle by the network structure. On the other hand, if the average particle diameter of the silicon-containing particles is larger than 5 μm, it may become difficult to achieve a high charge/discharge capacity.

Preferably, the anodic carbon material for the lithium secondary battery according to the present invention contains the silicon alloy, oxide, nitride, or carbide in an amount not smaller than 5% by mass but not larger than 60% by mass with respect to the total mass of the anodic carbon material. If the content by mass of the silicon alloy, oxide, nitride, or carbide is smaller than 5%, the amount of occlusion of lithium ions is small, and a high charge/discharge capacity cannot be expected. On the other hand, if the content exceeds 60% by mass, the expansion/contraction of the silicon associated with the occlusion/release of the lithium ions becomes difficult to suppress by the network structure, and the charge/discharge cycle characteristics may degrade. The content by mass of the silicon alloy, oxide, nitride, or carbide is measured by an ash content test method that conforms to JIS K 2272:1998.

The anodic carbon material for the lithium secondary battery according to the present invention is manufactured by first mixing the silicon-containing particles containing the silicon alloy, oxide, nitride, or carbide, capable of occluding and releasing lithium ions, into a carbon precursor, thereby forming a mixture with the silicon-containing particles dispersed in the carbon precursor, and then carbonizing the mixture. As a result of this carbonization, the carbon precursor is converted into a resinous carbon material, and the network structure, formed from the nanofibers, etc., enclosing the composite particles composed of the thus converted resinous carbon material and the silicon-containing particles, is formed with the surface of the composite particles as the starting point. The carbon material according to the present invention is also manufactured by first mixing the silicon-containing particles containing the silicon alloy, oxide, nitride, or carbide, capable of occluding and releasing lithium ions, into a carbon precursor together with a catalyst, thereby forming a mixture with the silicon-containing particles and the catalyst dispersed in the carbon precursor, and then carbonizing the mixture. By performing carbonization with the catalyst dispersed through the carbon precursor, the amount of formation of the nanofibers, etc., especially, the carbon nanofibers, etc., that form the network structure can be increased.

Examples of the carbon precursor include a graphitizable material or a non-graphitizable material selected from the group consisting of petroleum pitch, coal pitch, a phenol resin, a furan resin, an epoxy resin, and polyacrylonitrile. Use may be made of a mixture of a graphitizable material and a non-graphitizable material. Further, a curing agent (for example, hexamethylene tetramine) may be included in the phenol resin, etc. In that case, the curing agent can also form part of the carbon precursor.

Examples of the catalyst, if used, include one that contains at least one element selected from the group consisting of copper (Cu), iron (Fe), cobalt (Co), nickel (Ni), molybdenum (Mo), and manganese (Mn). The catalytic element may be one that is contained as an impurity in the carbon precursor. In that case, it may not be necessary to separately prepare the catalyst and mix it into the precursor. It is preferable to mix the catalytic element with the silicon-containing particles in a solution so that the mixture is formed by dispersing the silicon-containing particles and the catalyst dispersed through the carbon precursor. To provide such a solution, it is preferable to prepare the catalytic element as a metallic salt compound, examples including salts of inorganic acid groups, such as nitrates, sulphates, hydrochlorides, etc., or salts of organic acid groups, such as carboxylic acids, sulphonic acids, phenols, etc. The solvent used to produce such a solution can be water, an organic solvent, or a mixture of water and an organic solvent; specifically, examples of the organic solvent include ethanol, isopropyl alcohol, toluene, benzene, hexane, tetrahydrofuran, etc.

The method of mixing the silicon-containing particles, the carbon precursor, and the catalyst, if used, is not limited to any specific method, but any suitable method may be used, including, for example, a method of dissolving or mixing in a solution using an agitator such as a Homo Disper or a homogenizer, a method of mixing by grinding using a grinder such as a centrifugal grinder, a free mill, or a jet mill, and a method of mixing by kneading using a mortar and a pestle. The order in which the silicon-containing particles and the carbon precursor are mixed into the solvent (if used) is not specifically limited; for example, the silicon-containing particles and the carbon precursor may be mixed in this order into the solvent, or the order may be reversed. When forming the composite particles using the silicon-containing particles and the resinous carbon material enclosing the silicon-containing particles, the silicon-containing particles and the carbon precursor may be mixed together in a solvent to produce a slurry mixture, or the carbon precursor mixed with the silicon-containing particles may be cured to produce a solid mixture. In producing the slurry, if the carbon precursor is a liquid, there is no need to use a solvent.

When adjusting the particle size distribution of the anodic carbon material for the lithium secondary battery according to the present invention, a known grinding method and a known classifying method can be used. Examples of the grinding machine used for this purpose include a hammer mill, a jaw crasher, an impact grinder, etc. Examples of the classifying method include an air sifting method and a sieving method, and examples of the air sifter include a turbo classifier, Turboplex, etc.

The heating temperature for carbonization may be suitably set, preferably in the range of 400 to 1400°C, and more preferably in the range of 600 to 1300°C. The rate at which the temperature is raised up to the heating temperature is not specifically limited, but may be set preferably in the range of 0.5 to 600°C/hour, and more preferably in the range of 20 to 300°C/hour. The duration of time that the material is held at the heating temperature may be suitably set, preferably not longer than 48 hours, and more preferably in the range of 1 to 12 hours. The carbonization may be performed in a reducing atmosphere such as an argon, nitrogen, or carbon dioxide atmosphere. Further, it is preferable to control the properties of the resulting resinous carbon material by performing the carbonization in two or more stages. For example, it is preferable to first treat the material for about 1 to 6 hours at temperatures of 400 to 700°C (primary carbonization), and then grind the thus treated carbon material into particles having a desired average particle diameter and finally treat the ground carbon material at temperatures of 1000°C or higher (secondary carbonization).

As described above, in the fabrication of the anodic carbon material for the lithium secondary battery according to the present invention, since the resinous carbon material and the network structure formed from the nanofibers, etc., are simultaneously formed in the carbonization process, the nanofibers, etc., need not be prepared in a separate process using a vapor phase method, an arc-discharge method, or a plasma method; as a result, the fabrication process can be simplified and the cost reduced.

By using the thus obtained carbon material as the anode active material, the lithium secondary battery anode of the present invention can be produced. The lithium secondary battery anode of the present invention can be fabricated using a prior known method. For example, a binder, a conductive agent, etc., are added to the carbon material obtained as the anode active material according to the present invention, and the resulting mixture is dissolved in a suitable solvent or dispersion medium to produce a slurry having a desired viscosity; then, the slurry is applied over a current collector made of a metal foil or the like, to form thereon a coating of several micrometers to several hundred micrometers in thickness. The solvent or dispersion medium is removed by heat-treating the coating at about 50 to 200°C, to complete the fabrication of the anode according to the present invention.

Any prior known material may be used as the binder in the fabrication of the anode according to the present invention; for example, use may be made of a polyvinylidene fluoride resin, polytetrafluoroethylene, a styrene-butadiene copolymer, a polyimide resin, a polyamide resin, polyvinyl alcohol, polyvinyl butyral, etc. Further, any known material commonly used as a conductive agent may be used as the conductive agent in the fabrication of the anode according to the present invention; examples include graphite, acetylene black, and Ketjen black. Furthermore, any known material that can help to uniformly mix together the anode active material, the binder, the conductive agent, etc., may be used as the solvent or dispersion medium in the fabrication of the anode according to the present invention; examples include N-methyl-2-pyrrolidone, methanol, and acetanilide.

By using the lithium secondary battery anode of the present invention, the lithium secondary battery of the present invention can be produced. The lithium secondary battery of the present invention can be fabricated using a prior known method, and generally includes, in addition to the anode of the present invention, a cathode, an electrolyte, and a separator for preventing short-circuiting between the anode and the cathode. If the electrolyte is a solid electrolyte complexed with a polymer that also serves as a separator, there is no need to provide an independent separator.

The cathode for the lithium secondary battery of the present invention can be fabricated using a prior known method. For example, a binder, a conductive agent, etc. are added to the cathode active material, and the resulting mixture is dissolved in a suitable solvent or dispersion medium to produce a slurry having a desired viscosity; then, the slurry is applied over a current collector made of a metal foil or the like, to form thereon a coating of several micrometers to several hundred micrometers in thickness, and the solvent or dispersion medium is removed by heat-treating the coating at about 50 to 200°C. Any prior known material may be used as the cathode active material; for example, use may be made of a cobalt-containing complex oxide such as $LiCoO_2$, a manganese-containing complex oxide such as $LiMn_2O_4$, a nickel-containing complex oxide such as $LiNiO_2$, a mixture of these oxides, an oxide in which a portion of the nickel in $LiNiO_2$ is replaced by cobalt or manganese, or an iron-containing complex oxide such as $LiFeVO_4$ or $LiFePO_4$.

For the electrolyte, use may be made of a known electrolyte solution, an ambient-temperature molten salt (ionic liquid), and an organic or inorganic solid electrolyte. Examples of known electrolyte solutions include cyclic carbonate esters such as ethylene carbonate, propylene carbonate, etc., and chain carbonate esters such as ethylmethyl carbonate, diethyl carbonate, etc. Examples of ambient-temperature molten salts (ionic liquids) include imidazolium-based salts, pyrrolidinium-based salts, pyridinium-based salts, ammonium-based salts, phosphonium-based salts, and sulfonium-based salts. Examples of the solid electrolyte include: an organic polymer gel exemplified by a straight-chain polymer, etc., such as a polyether-based polymer, a polyester-based polymer, a polyimine-based polymer, a polyvinyl acetal-based polymer, a polyacrylonitrile-based polymer, a polyfluoro alkene-based polymer, a polyvinyl chloride-based polymer, a poly(vinyl chloride-vinylidene fluoride)-based polymer, a poly(styrene- acrylonitrile)-based polymer, and a nitrile rubber; an inorganic ceramic such as zirconia; and an inorganic electrolyte such as silver iodide, a sulfur-silver iodide compound, and a rubidium-silver iodide compound. Further, a solution prepared by dissolving a lithium salt in the above electrolyte may be used as the electrolyte for the secondary battery. Furthermore, a flame-retardant electrolyte solvent may be added in order to confer flame retardance to the electrolyte. Likewise, a plasticizer may be added in order to reduce the viscosity of the electrolyte.

Examples of the lithium salt to be dissolved in the electrolyte include $LiPF_6$, $LiClO_4$, $LiCF_3SO_3$, $LiBF_4$, $LiAsF_6$, $LiN(CF_3SO_2)_2$, $LiN(C_2F_5SO_2)_2$, and $LiC(CF_3SO_2)_3$. These lithium salts may be used either singly or in combination of two or more salts. The lithium salt is usually added in an amount of 0.1 to 89.9% by mass, and preferably in an amount of 1.0 to 79.0% by mass, with respect to the total mass of the electrolyte. Components other than the lithium salt in the electrolyte may be added in a suitable amount, provided that the lithium salt content is maintained within the above-stated range.

The polymer for use in the electrolyte is not specifically limited, the only requirement being that the polymer be electrochemically stable and highly ionically conductive; for example, use may be made of an acrylate-based polymer, polyvinylidene fluoride, etc. A polymer synthesized from a substance containing a salt monomer comprising an onium cation having a polymerizable functional group and an organic anion having a polymerizable functional group is particularly preferable because such a polymer has a particularly high ionic conductivity and can contribute to further enhancing the charge/discharge characteristics. The polymer content of the electrolyte is preferably in the range of 0.1 to 50% by mass, and more preferably in the range of 1 to 40% by mass.

The flame-retardant electrolyte solvent is not specifically limited, the only requirement being that it be a compound having a self-extinguishing property and capable of dissolving an electrolyte salt while allowing the electrolyte salt to coexist; for example, use may be made of phosphate ester, a halogen compound, phosphazene, etc.

Examples of the plasticizer include cyclic carbonate esters such as ethylene carbonate, propylene carbonate, etc., and chain carbonate esters such as ethylmethyl carbonate, diethyl carbonate, etc. These plasticizers may be used either singly or in combination of two or more plasticizers.

When using a separator in the lithium secondary battery of the present invention, any prior known material that is electrochemically stable and that can prevent short-circuiting between the cathode and anode may be used. Examples of such separators include polyethylene separators, polypropylene separators, cellulose separators, nonwoven fabrics, inorganic-based separators, glass filters, etc. If a polymer is included in the electrolyte, the electrolyte may also serves as a separator; in that case, there is no need to provide an independent separator.

The secondary battery of the present invention can be fabricated using a prior known method. For example, first the cathode and anode fabricated as earlier described are each cut to a prescribed shape and size; then, the cathode and anode are bonded together by interposing a separator therebetween to prevent them from directly contacting each other, thus producing a single-layer cell. Next, an electrolyte is injected into the space between the electrodes of the single-layer cell by an injection method or the like. The thus fabricated cell is packaged and hermetically sealed in an outer casing formed, for example, from a three-layered laminated film comprising a polyester film, an aluminum film, and a modified polyolefin film, to complete the fabrication of the lithium secondary battery. The secondary battery cell thus fabricated may be used as a single cell or, in some applications, a plurality of such cells may be connected together and used as a module.

EXAMPLES

Examples will be provided below in order to describe the present invention in further detail.

<Working example 1>

First, 135 parts by mass of a novolac-type phenol resin (PR-50237 manufactured by Sumitomo Bakelite) and 25 parts by mass of hexamethylene tetramine (manufactured by Mitsubishi Gas Chemical) were dissolved in a four-necked flask containing 20 parts by mass of methanol; then, 50 parts by mass of silicon monoxide (average particle diameter: 1.2 $\mu$m) were added, and the mixture was stirred for 2 hours. After stirring, the resulting slurry was cured by heating at 200°C for 5 hours. After curing, the temperature was raised under a nitrogen atmosphere until the temperature reached 500°C, at which carbonization was performed for 1 hour. The carbon material thus obtained was ground to an average particle diameter of 11 $\mu$m, and the temperature was further raised until the temperature reached 1100°C, at which the ground carbon material was subjected to carbonization for 10 hours to obtain a carbon material for a secondary battery. When this carbon material was measured by the following measuring method, the pore volume of pores in the 0.25 to 0.45 nm range was 0.85 cm$^3$/g, which accounted for 55% by volume with respect to the total pore volume. Further, when this carbon material was observed under a scanning electron microscope (SEM), it was confirmed that the nanofibers, etc., with a fiber diameter of 50 nm were grown from the surfaces of the particles of the carbon material. The carbon material thus obtained contained 36.7% by weight of silicon monoxide.

The result obtained by observing the composite carbon material under a scanning electron microscope (SEM) is shown in Figure 1 (in the form of an electron micrograph). As can be seen from Figure 1, it was confirmed that the nanofibers, etc., were grown from the surfaces of the particles of the composite carbon material so as to enclose the particles. Further, when two different portions of the nanofibers, etc. observed under SEM were examined using an energy dispersive X-ray analyzer (EDX) to analyze the constituent elements, peaks associated with carbon, oxygen, and silicon were observed, as shown in Figures 2(A) and 2(B).

Evaluation of carbon material

Measurements of pore volume and pore distribution

A test sample was measured using a micropore distribution analyzer "ASAP-2010" manufactured by Shimadzu Co., Ltd. First, the adsorbed gas was desorbed by pretreating the test sample by heating under vacuum at 623 K and, using N$_2$ as a probe gas, its adsorption isotherm at 77.3 K was measured in the relative pressure range of 0.005 to 0.86 at an absolute pressure of 760 mmHg; then, using the adsorbate layer thickness t determined from the specific surface area and the amount of adsorption obtained for the adsorption medium, the mean hydraulic radius of pores was calculated based on Halsey and Halsey and Jura thickness equations, and the pore volume was calculated using the following equations.
The Halsey and Halsey and Jura thickness equations are given below.

$$t = (M \times Vsp/22414) \times (Va/S)$$

[where t is the statistical thickness of the adsorbate layer, M is the molecular weight of the adsorbate, Va is the amount of adsorption per unit mass of the adsorbent, Vsp is the specific volume of the adsorbate gas, and S is the specific surface area of the adsorbent]

$$t_I = HP1 \times [HP2/ln(Prel_I)]HP3$$

[where $t_I$ is the thickness at the Ith point, HP1 is a Halsey parameter #1, HP2 is a Halsey parameter #2, HP3 is a Halsey parameter #3, and $Prel_I$ is the relative pressure (mmHg) at the Ith point]

$$Mean\ hydraulic\ radius\ (nm):\ R_I = (t_I + t_{I-1}) / 20$$

Increase $\Delta S$ in pore surface area when shut off at the Ith point: $\Delta S = S_{I-1} - S_I$
Accumulated pore surface area $(m^2/g)S$ when shut off at the Ith point: $S = S_1 + S_2 + S_3 + ... Sn$
Increase $\Delta V$ in pore volume when shut off as the Ith point: $\Delta V = (S \times 10^4\ cm^2/m^2) \times (R_I \times 10^{-8}\ cm/\text{Å})$
Pore volume $\Delta V/\Delta R_I$ $(cm^3/g)$ at the Ith point: $\Delta V/\Delta R_I = \Delta V/\Delta t_I - t_{I-1}$
The Ith point refers to an arbitrary measurement point for each relative pressure.
Pore volume $(cm^3/g)$ when shut off at the Ith point: $V = V_1 + V_2 + V_3 + ... Vn$.

The particle diameter of the carbon material was measured using a laser diffraction particle size distribution analyzer (LS-230 manufactured by Beckman Coulter). The average particle diameter was calculated in terms of volume, and the particle diameter whose frequency of occurrence was 50% by volume was defined as the average particle diameter.

Evaluation of charge/discharge characteristics

(1) Fabrication of anode

10 parts by mass of polyvinylidene fluoride as a binder and 3 parts by mass of acetylene black were added to 100 parts by mass of the carbon material obtained in the above example, and were mixed together by adding a suitable amount of N-methyl-2-pyrrolidone as a dilute solvent, to prepare a slurry anodic mixture.
The slurry anodic mixture was applied over both surfaces of a 10-$\mu$m thick copper foil, and the resulting structure was vacuum dried at 110°C for 1 hour. After vacuum drying, the structure was molded under pressure using a roll press to produce an electrode with a thickness of 100 $\mu$m. Then, the electrode was cut into a shape measuring 40 mm in width and 290 mm in length to form an anode. The anode was then punched out with a diameter of 13 mm to complete the fabrication of the anode for the lithium-ion secondary battery.

(2) Fabrication of lithium-ion secondary battery

The above anode, a separator (polypropylene porous film, 16 mm in diameter and 25 $\mu$m in thickness), and a lithium metal (12 mm in diameter and 1 mm in thickness) as a working electrode were placed in this order at prescribed positions in a 2032-type coil cell manufactured by Hohsen Corporation. Then, an electrolytic solution, prepared by dissolving lithium perchlorate in a concentration of 1 mole per liter into a mixture of ethylene carbonate and diethyl carbonate (volume ratio 1:1), was injected into the cell to complete the fabrication of the lithium-ion secondary battery cell.

(3) Evaluation of battery characteristics <Evaluation of initial charge/discharge characteristics>

To evaluate the charge capacity, the battery was charged at a constant current with a current density of 25 mA/g; when the potential reached 0 V, the battery was charged at a constant voltage of 0 V, and the amount of electricity charged until the current density reached 1.25 mA/g was taken as the charge capacity.
On the other hand, to evaluate the discharge capacity, the battery was discharged at a constant current with the same current density of 25 mA/g; when the potential reached 2.5 V, the battery was discharged at a constant voltage of 2.5 V, and the amount of electricity discharged until the current density reached 1.25 mA/g was taken as the discharge capacity.

The charge/discharge characteristics were evaluated using a charge/discharge characteristic evaluation instrument (HJR-1010m SM8 manufactured by Hokuto Denko).
The initial charge/discharge efficiency was defined by the following equation.

$$\text{Initial charge/discharge efficiency (\%) = Initial}$$
$$\text{discharge capacity (mAh/g) / Initial charge capacity}$$
$$\text{(mAh/g) } \times \text{ 100}$$

<Evaluation of cycling capacity>

The discharge capacity obtained after measuring 200 times under the initial charge/discharge characteristic evaluation conditions was taken as the 200th cycle discharge capacity. The cycling capacity (200-cycle capacity retention rate) was defined by the following equation.

$$\text{Cycling capacity (\%, 200-cycle capacity retention}$$
$$\text{rate) = 200th cycle discharge capacity (mAh/g) / Initial}$$
$$\text{discharge capacity (mAh/g) } \times \text{ 100}$$

<Evaluation of load characteristic>

The discharge capacity obtained by the initial charge/discharge characteristic evaluation was taken as the reference capacity ($C_0$) and, after charging with the reference capacity, discharge was performed with such a current density as to discharge the charged amount in one hour, and the resulting capacity was taken as 1C capacity. Similarly, after charging with the reference capacity, discharge was performed with such a current density as to discharge the charged amount in two minutes, and the resulting capacity was taken as 30C capacity. The load characteristic (%, capacity at 30C to capacity at 1C) was defined by the following equation.

$$\text{Load characteristic (\%, capacity at 30C to capacity}$$
$$\text{at 1C) = 30C capacity (mAh/g) / 1C capacity (mAh/g) } \times \text{ 100}$$

<Working example 2>

First, 135 parts by mass of a novolac-type phenol resin (PR-50237 manufactured by Sumitomo Bakelite) and 25 parts by mass of hexamethylene tetramine (manufactured by Mitsubishi Gas Chemical) were dissolved in a four-necked flask containing 30 parts by mass of acetone; then, 30 parts by mass of silicon monoxide (average particle diameter: 3.3 $\mu$m) were added, and the mixture was stirred for 3 hours. After stirring, the resulting slurry was cured by heating at 200°C for 3 hours. After curing, the temperature was raised under a nitrogen atmosphere until the temperature reached 550°C, at which carbonization was performed for 1 hour. The carbon material thus obtained was ground to an average particle diameter of 7 $\mu$m, and the temperature was further raised until the temperature reached 1150°C, at which the ground carbon material was subjected to carbonization for 10 hours to obtain a carbon material for a secondary battery. The pore volume of pores in the 0.25 to 0.45 nm range in the thus obtained carbon material was 0.75 cm$^3$/g, which accounted for 75% by volume with respect to the total pore volume. When this carbon material was observed under SEM, it was confirmed that the nanofibers, etc., with a fiber diameter of 40 nm were grown from the surfaces of the particles of the composite carbon material so as to enclose the particles. Further, when two different portions of the nanofibers, etc., observed under SEM were examined using an energy dispersive X-ray analyzer (EDX) to analyze the constituent elements, as in working example 1, peaks associated with carbon, oxygen, and silicon were observed. The carbon material obtained here contained 26.0% by weight of silicon monoxide. Next, a lithium-ion secondary battery was fabricated in the same manner as in working example 1, and its charge/discharge characteristics were evaluated.

<Working example 3>

First, 135 parts by mass of a novolac-type phenol resin (PR-50237 manufactured by Sumitomo Bakelite) and 25 parts by mass of hexamethylene tetramine (manufactured by Mitsubishi Gas Chemical) were dissolved in a four-necked flask containing 45 parts by mass of acetone; then, 45 parts by mass of silicon monoxide (average particle diameter: 0.7 $\mu$m) were added, and the mixture was stirred for 5 hours. After stirring, the resulting slurry was cured by heating at 200°C for 3 hours. After curing, the temperature was raised under a nitrogen atmosphere until the temperature reached 500°C, at which carbonization was performed for 3 hours. The carbon material thus obtained was ground to an average particle diameter of 11 $\mu$m, and the temperature was further raised until the temperature reached 1100°C, at which the ground carbon material was subjected to carbonization for 5 hours to obtain a carbon material for a secondary battery. When this carbon material was evaluated in the same manner as in working example 1, the pore volume of pores in the 0.25 to 0.45 nm range was 0.65 cm$^3$/g, which accounted for 55% by volume with respect to the total pore volume. When this carbon material was observed under SEM, it was confirmed that the nanofibers, etc., with a fiber diameter of 40 nm were grown from the surfaces of the particles of the composite carbon material so as to enclose the particles. Further, when two different portions of the nanofibers, etc., observed under SEM were examined using an energy dispersive X-ray analyzer (EDX) to analyze the constituent elements, as in working example 1, peaks associated with carbon, oxygen, and silicon were observed. The carbon material obtained here contained 35.3% by weight of silicon monoxide. Next, a lithium-ion secondary battery was fabricated in the same manner as in working example 1, and its charge/discharge characteristics were evaluated.

<Working example 4>

First, 135 parts by mass of a novolac-type phenol resin (PR-50237 manufactured by Sumitomo Bakelite) and 25 parts by mass of hexamethylene tetramine (manufactured by Mitsubishi Gas Chemical) were dissolved in a four-necked flask containing 25 parts by mass of acetone; then, 30 parts by mass of silicon monoxide (average particle diameter: 1.3 $\mu$m) and 0.1 parts of iron nitrate as a catalyst were added, and the mixture was stirred for 3 hours. After stirring, the resulting slurry was cured by heating at 200°C for 3 hours. After curing, the temperature was raised under a nitrogen atmosphere until the temperature reached 450°C, at which carbonization was performed for 3 hours. The carbon material thus obtained was ground to an average particle diameter of 12 $\mu$m, and the temperature was further raised until the temperature reached 1100°C, at which the ground carbon material was subjected to carbonization for 10 hours to obtain a carbon material for a secondary battery. When this carbon material was evaluated in the same manner as in working example 1, the pore volume of pores in the 0.25 to 0.45 nm range was 0.80 cm$^3$/g, which accounted for 50% by volume with respect to the total pore volume. When this carbon material was observed under SEM, it was confirmed that the nanofibers, etc., with a fiber diameter of 20 nm were grown from the surfaces of the particles of the composite carbon material so as to enclose the particles. Further, when two different portions of the nanofibers, etc., observed under SEM were examined using an energy dispersive X-ray analyzer (EDX) to analyze the constituent elements, as in working example 1, peaks associated with carbon, oxygen, and silicon were observed. The carbon material obtained here contained 28.4% by weight of silicon monoxide. Next, a lithium-ion secondary battery was fabricated in the same manner as in working example 1, and its charge/discharge characteristics were evaluated.

<Working example 5>

First, 100 parts by mass of β-naphthol, 53.3 parts by mass of a 43% solution of formaldehyde in water, and 3 parts by mass of oxalic acid were put in a three-necked flask equipped with a stirrer and a cooling tube and, after allowing them to react for 3 hours at 100°C, the reaction product was dehydrated by heating, to obtain 90 parts by mass of β-naphthol resin. Then, hexamethylene tetramine was added in an amount of 10 parts by mass per 100 parts by mass of β-naphthol resin obtained by repeating the above process and, after grinding and mixing them together, the mixture was dissolved in a four-necked flask containing 30 parts by mass of dimethyl sulfoamide; further, 60 parts by mass of silicon monoxide (average particle diameter: 3.3 $\mu$m) were added, and the mixture was stirred for 3 hours. After stirring, the resulting slurry was cured by heating at 200°C for 3 hours. After curing, the temperature was raised under a nitrogen atmosphere until the temperature reached 450°C, at which carbonization was carried out for 6 hours. The carbon material thus obtained was ground to an average particle diameter of 7 $\mu$m, and the temperature was further raised until the temperature reached 1100°C, at which the ground carbon material was subjected to carbonization for 10 hours to obtain a carbon material for a secondary battery. When this carbon material was evaluated in the same manner as in working example 1, the pore volume of pores in the 0.25 to 0.45 nm range was 0.65 cm$^3$/g, which accounted for 65% by volume with respect to the total pore volume. When this carbon material was observed under SEM, it was confirmed that the nanofibers, etc., with a fiber diameter of 20 nm were grown from the surfaces of the particles of the composite carbon material so as to enclose the particles. Further, when two different portions of the nanofibers, etc., observed under SEM were examined using an energy dispersive X-ray analyzer (EDX) to analyze the constituent elements, as in working example 1, peaks associated with carbon, oxygen, and silicon were observed. The carbon material obtained here contained 56.2% by weight of silicon monoxide.

Next, a lithium-ion secondary battery was fabricated in the same manner as in working example 1, and its charge/discharge characteristics were evaluated.

<Working example 6>

First, 100 parts by mass of a resol-type phenol resin (PR-51723 manufactured by Sumitomo Bakelite) were dissolved in a four-necked flask containing 30 parts by mass of acetone; then, 20 parts by mass of silicon monoxide (average particle diameter: 1.1 $\mu$m) were added, and the mixture was stirred for 3 hours. After stirring, the resulting slurry was cured by heating at 200°C for 3 hours. After curing, the temperature was raised under a nitrogen atmosphere until the temperature reached 550°C, at which carbonization was carried out for 2 hours. The carbon material thus obtained was ground to an average particle diameter of 10 $\mu$m, and the temperature was further raised until the temperature reached 1200°C, at which the ground carbon material was subjected to carbonization for 18 hours to obtain a carbon material for a secondary battery. When this carbon material was evaluated in the same manner as in working example 1, the pore volume of pores in the 0.25 to 0.45 nm range was 0.012 cm$^3$/g, which accounted for 40% by volume with respect to the total pore volume. When this carbon material was observed under SEM, it was confirmed that the nanofibers, etc., with a fiber diameter of 35 nm were grown from the surfaces of the particles of the composite carbon material so as to enclose the particles. Further, when two different portions of the nanofibers, etc. observed under SEM were examined using an energy dispersive X-ray analyzer (EDX) to analyze the constituent elements, as in working example 1, peaks associated with carbon, oxygen, and silicon were observed. The carbon material obtained here contained 33.1% by weight of silicon monoxide. Next, a lithium-ion secondary battery was fabricated in the same manner as in working example 1, and its charge/discharge characteristics were evaluated.

<Working example 7>

First, 135 parts by mass of a novolac-type phenol resin (PR-50237 manufactured by Sumitomo Bakelite) and 25 parts by mass of hexamethylene tetramine (manufactured by Mitsubishi Gas Chemical) were dissolved in a four-necked flask containing 20 parts by mass of methanol; then, 50 parts by mass of silicon monoxide (average particle diameter: 1.2 $\mu$m) were added, and the mixture was stirred for 2 hours. After stirring, the resulting slurry was cured by heating at 150°C for 5 hours. After curing, the temperature was raised under a nitrogen atmosphere until the temperature reached 600°C, at which carbonization was performed for 3 hours. The carbon material thus obtained was ground to an average particle diameter of 9 $\mu$m, and the temperature was further raised until the temperature reached 1250°C, at which the ground carbon material was subjected to carbonization for 3 hours to obtain a carbon material for a secondary battery. The pore volume of pores in the 0.25 to 0.45 nm range in the thus obtained carbon material was 1.2 cm$^3$/g, which accounted for 80% by volume with respect to the total pore volume. When this carbon material was observed under SEM, it was confirmed that the nanofibers, etc., with a fiber diameter of 40 nm were grown from the surfaces of the particles of the composite carbon material so as to enclose the particles. Further, when two different portions of the nanofibers, etc., observed under SEM were examined using an energy dispersive X-ray analyzer (EDX) to analyze the constituent elements, as in working example 1, peaks associated with carbon, oxygen, and silicon were observed. The carbon material obtained here contained 35.9% by weight of silicon monoxide. Next, a lithium-ion secondary battery was fabricated in the same manner as in working example 1, and its charge/discharge characteristics were evaluated.

<Working example 8>

First, 135 parts by mass of a novolac-type phenol resin (PR-50237 manufactured by Sumitomo Bakelite) and 25 parts by mass of hexamethylene tetramine (manufactured by Mitsubishi Gas Chemical) were dissolved in a four-necked flask containing 20 parts by mass of methanol; then, 40 parts by mass of silicon monoxide (average particle diameter: 1.2 $\mu$m) were added, and the mixture was stirred for 2 hours. After stirring, the resulting slurry was cured by heating at 175°C for 3 hours. After curing, the temperature was raised under a nitrogen atmosphere until the temperature reached 650°C, at which carbonization was performed for 1 hour. The carbon material thus obtained was ground to an average particle diameter of 9 $\mu$m, and the temperature was further raised until the temperature reached 1110°C, at which the ground carbon material was subjected to carbonization for 18 hours to obtain a carbon material for a secondary battery. The pore volume of pores in the 0.25 to 0.45 nm range in the thus obtained carbon material was 0.85 cm$^3$/g, which accounted for 25% by volume with respect to the total pore volume. When this carbon material was observed under SEM, it was confirmed that the nanofibers, etc. with a fiber diameter of 35 nm were grown from the surfaces of the particles of the composite carbon material so as to enclose the particles. Further, when two different portions of the nanofibers, etc., observed under SEM were examined using an energy dispersive X-ray analyzer (EDX) to analyze the constituent elements, as in working example 1, peaks associated with carbon, oxygen, and silicon were observed. The carbon material obtained here contained 36.2% by weight of silicon monoxide. Next, a lithium-ion secondary battery was fabricated in the same manner as in working example 1, and its charge/discharge characteristics were evaluated.

<Working example 9>

First, 100 parts by mass of a resol-type phenol resin (PR-51723 manufactured by Sumitomo Bakelite) were dissolved in a four-necked flask containing 30 parts by mass of acetone; then, 45 parts by mass of silicon monoxide (average particle diameter: 1.3 $\mu$m) were added, and the mixture was stirred for 3 hours. After stirring, the resulting slurry was cured by heating at 200°C for 3 hours. After curing, the temperature was raised under a nitrogen atmosphere until the temperature reached 450°C, at which carbonization was performed for 3 hours. The carbon material thus obtained was ground to an average particle diameter of 10 $\mu$m, and the temperature was further raised until the temperature reached 1050°C, at which the ground carbon material was subjected to carbonization for 3 hours to obtain a carbon material for a secondary battery. The pore volume of pores in the 0.25 to 0.45 nm range in the thus obtained carbon material was 0.0003 cm$^3$/g, which accounted for 30% by volume with respect to the total pore volume. When this carbon material was observed under SEM, it was confirmed that the nanofibers, etc., with a fiber diameter of 50 nm were grown from the surfaces of the particles of the composite carbon material so as to enclose the particles. Further, when two different portions of the nanofibers, etc., observed under SEM were examined using an energy dispersive X-ray analyzer (EDX) to analyze the constituent elements, as in working example 1, peaks associated with carbon, oxygen, and silicon were observed. The carbon material obtained here contained 34.1% by weight of silicon monoxide. Next, a lithium-ion secondary battery was fabricated in the same manner as in working example 1, and its charge/discharge characteristics were evaluated.

<Comparative example 1>

First, 135 parts by mass of a novolac-type phenol resin (PR-50237 manufactured by Sumitomo Bakelite) and 25 parts by mass of hexamethylene tetramine (manufactured by Mitsubishi Gas Chemical) were dissolved in a four-necked flask containing 20 parts by mass of methanol; then, 20 parts by mass of silicon (average particle diameter: 54 $\mu$m) were added, and the mixture was stirred for 2 hours. After stirring, the resulting slurry was cured by heating at 200°C for 3 hours, and a carbon material was obtained in the same manner as in working example 1, except that the carbonization was carried out for 10 hours after the temperature was raised up to 1000°C. The average particle diameter of the carbon material thus obtained was adjusted to 8 $\mu$m. When the resulting carbon material was evaluated in the same manner as in working example 1, the pore volume of pores in the 0.25 to 0.45 nm range was 0.65 cm$^3$/g, which accounted for 20% by volume with respect to the total pore volume. When this carbon material was observed under SEM, no network structure was observed on the surfaces of the carbon particles. The carbon material obtained here contained 23.1% by weight of silicon. A lithium-ion secondary battery was fabricated in the same manner as in working example 1, and its charge/discharge characteristics were evaluated.

<Comparative example 2>

First, 135 parts by mass of a novolac-type phenol resin (PR-50237 manufactured by Sumitomo Bakelite) and 25 parts by mass of hexamethylene tetramine (manufactured by Mitsubishi Gas Chemical) were dissolved in a four-necked flask containing 30 parts by mass of methanol; then, 40 parts by mass of silicon (average particle diameter: 25 $\mu$m) were added, and the mixture was stirred for 3 hours. After stirring, the resulting slurry was cured by heating at 200°C for 3 hours, and a carbon material was obtained in the same manner as in working example 1, except that the carbonization was carried out for 5 hours after the temperature was raised up to 900°C. The average particle diameter of the carbon material thus obtained was adjusted to 10 $\mu$m. When the resulting carbon material was evaluated in the same manner as in working example 1, the pore volume of pores in the 0.25 to 0.45 nm range was 1.25 cm$^3$/g, which accounted for 25% by volume with respect to the total pore volume. When this carbon material was observed under SEM, no network structure was observed on the surfaces of the carbon particles. The carbon material obtained here contained 32.3% by weight of silicon. A lithium-ion secondary battery was fabricated in the same manner as in working example 1, and its charge/discharge characteristics were evaluated.

For the above-described working examples and comparative examples, the evaluation results of the carbon materials and the evaluation results of the battery characteristics are shown in Table 1 and Table 2, respectively.

[Table 1]

| | AVERAGE PARTICLE DIAMETER OF ANODIC CARBON MATERIAL | AVERAGE PARTICLE DIAMETER OF SILICON-CONTAINING PARTICLES OR OF SILICON | SILICON MONOXIDE CONTENT OR SILICON CONTENT | PORE VOLUME [0.25 TO 0.45 nm] | PORE VOLUME [VS. TOTAL PORE VOLUME] | DIAMETER OF SURFACE NANOFIBERS, ETC. |
|---|---|---|---|---|---|---|
| | [μm] | [μm] | [%] | [cm³/g] | [%] | [nm] |
| WORKING EXAMPLE 1 | 11 | 1.2 | 36.7 | 0.85 | 55 | 50 |
| WORKING EXAMPLE 2 | 7 | 3.3 | 26.0 | 0.75 | 75 | 40 |
| WORKING EXAMPLE 3 | 11 | 0.7 | 35.3 | 0.65 | 55 | 40 |
| WORKING EXAMPLE 4 | 12 | 1.3 | 28.4 | 0.80 | 50 | 20 |
| WORKING EXAMPLE 5 | 7 | 3.3 | 56.2 | 0.65 | 65 | 20 |
| WORKING EXAMPLE 6 | 10 | 1.1 | 33.1 | 0.012 | 40 | 35 |
| WORKING EXAMPLE 7 | 9 | 1.2 | 35.9 | 1.20 | 80 | 40 |
| WORKING EXAMPLE 8 | 9 | 1.2 | 36.2 | 0.85 | 25 | 35 |
| WORKING EXAMPLE 9 | 10 | 1.3 | 34.1 | 0.0003 | 30 | 50 |
| COMPARATIVE EXAMPLE 1 | 8 | 54 | 23.1 | 0.65 | 20 | N.A. |
| COMPARATIVE EXAMPLE 2 | 10 | 25 | 32.3 | 1.25 | 25 | N.A. |

[Table 2]

| | INITIAL CHARGE CAPACITY | INITIAL DISCHARGE CAPACITY | INITIAL CHARGE/ DISCHARGE EFFICIENCY | CYCLE CAPABILITY (200-CYCLE CAPACITY RETENTION RATE) | LOAD CHARACTERISTIC (CAPACITY AT 30C TO CAPACITY AT 1C) |
|---|---|---|---|---|---|
| | [mAh/g] | [mAh/g] | [%] | [%] | [%] |
| WORKING EXAMPLE 1 | 1233 | 1011 | 82.0 | 94.1 | 81 |
| WORKING EXAMPLE 2 | 1020 | 796 | 78.0 | 93.2 | 76 |

(continued)

| | INITIAL CHARGE CAPACITY | INITIAL DISCHARGE CAPACITY | INITIAL CHARGE/ DISCHARGE EFFICIENCY | CYCLE CAPABILITY (200-CYCLE CAPACITY RETENTION RATE) | LOAD CHARACTERISTIC (CAPACITY AT 30C TO CAPACITY AT 1C) |
|---|---|---|---|---|---|
| | [mAh/g] | [mAh/g] | [%] | [%] | [%] |
| WORKING EXAMPLE 3 | 1462 | 1184 | 81.0 | 95.5 | 80 |
| WORKING EXAMPLE 4 | 1011 | 849 | 84.0 | 92.1 | 72 |
| WORKING EXAMPLE 5 | 1641 | 1267 | 77.2 | 93.2 | 74 |
| WORKING EXAMPLE 6 | 1365 | 1011 | 74.1 | 92.7 | 71 |
| WORKING EXAMPLE 7 | 1045 | 775 | 74.2 | 89.3 | 70 |
| WORKING EXAMPLE 8 | 1325 | 943 | 71.2 | 82.4 | 67 |
| WORKING EXAMPLE 9 | 1521 | 1059 | 69.6 | 79.2 | 68 |
| COMPARATIVE EXAMPLE 1 | 1201 | 805 | 67.0 | 19.1 | 45 |
| COMPARATIVE EXAMPLE 2 | 1878 | 1226 | 65.3 | 12.1 | 38 |

As is apparent from Table 1 and Table 2, the lithium-ion secondary batteries of working examples 1 to 9 each exhibited a discharge capacity retention rate of about 80% or higher after 200 cycles, a significant improvement over comparative examples 1 and 2 whose discharge capacity retention rate was less than 20%. The reason for this is believed to be that, as shown in Figure 1, in the working examples, the nanofibers, etc. were grown from the surfaces of the particles of the composite carbon material so as to enclose the particles, serving to suppress the comminution of the anodic carbon material associated with the expansion/contraction of the material during charge/discharge cycling. In the comparative examples, on the other hand, since there were no nanofibers, etc., enclosing the particles, the comminution of the anodic carbon material associated with the expansion/contraction of the material during charge/discharge cycling proceeded, and the anode virtually disintegrated. In particular, in working examples 1 to 6, the volume of the pores having pore diameters of 0.25 to 0.45 nm was in the range of 0.0005 to 1.0 $cm^3$/g, and was larger than 30% by volume with respect to the total pore volume; as a result, the discharge capacity retention rate after 200 cycles was higher than 90%, and the load characteristic also exceeded 70%.

**Claims**

1.   An anodic carbon material for a lithium secondary battery, comprising:

composite particles composed of silicon-containing particles containing an alloy, oxide, nitride, or carbide of silicon capable of occluding and releasing lithium ions and a resinous carbon material enclosing said silicon-containing particles; and
a network structure formed from nanofibers and/or nanotubes that bond to surfaces of said composite particles and that enclose said composite particles, and wherein:
said network structure contains silicon.

**2.** An anodic carbon material for a lithium secondary battery as claimed in claim 1, wherein said resinous carbon material has pores and, of said pores, pores having pore diameters of 0.25 to 0.45 nm as measured by a micropore method using a nitrogen gas adsorption process have a combined volume of 0.0001 to 1.5 cm$^3$/g

**3.** An anodic carbon material for a lithium secondary battery as claimed in claim 2, wherein the combined volume of said pores having pore diameters of 0.25 to 0.45 nm is in the range of 0.0005 to 1.0 cm$^3$/g.

**4.** An anodic carbon material for a lithium secondary battery as claimed in any one of claims 1 to 3, wherein said resinous carbon material has pores and, of said pores, pores having pore diameters of 0.25 to 0.45 nm as measured by a micropore method using a nitrogen gas adsorption process constitute 25% or more by volume with respect to the total pore volume of said resinous carbon material.

**5.** An anodic carbon material for a lithium secondary battery as claimed in claim 4, wherein said pores having pore diameters of 0.25 to 0.45 nm constitute 30% or more by volume with respect to the total pore volume of said resinous carbon material.

**6.** An anodic carbon material for a lithium secondary battery as claimed in any one of claims 1 to 5, wherein said network structure further contains carbon.

**7.** An anodic carbon material for a lithium secondary battery as claimed in any one of claims 1 to 6, wherein said silicon-containing particles contain silicon oxide.

**8.** An anodic carbon material for a lithium secondary battery as claimed in any one of claims 1 to 7, wherein said carbon material contains the alloy, oxide, nitride, or carbide of said silicon in an amount not smaller than 5% by mass but not larger than 60% by mass.

**9.** An anodic carbon material for a lithium secondary battery as claimed in any one of claims 1 to 8, wherein said carbon material has an average particle diameter in the range of 3 $\mu$m to 15 $\mu$m.

**10.** A lithium secondary battery anode comprising an anodic carbon material for a lithium secondary battery as claimed in any one of claims 1 to 9.

**11.** A lithium secondary battery comprising a lithium secondary battery anode as claimed in claim 10.

**12.** A method for manufacturing an anodic carbon material for a lithium secondary battery, comprising:

mixing silicon-containing particles containing an alloy, oxide, nitride, or carbide of silicon, capable of occluding and releasing lithium ions, into a carbon precursor, thereby forming a mixture with said silicon-containing particles dispersed in said carbon precursor; and carbonizing said mixture.

**13.** A method for manufacturing an anodic carbon material for a lithium secondary battery, comprising:

mixing silicon-containing particles containing an alloy, oxide, nitride, or carbide of silicon, capable of occluding and releasing lithium ions, into a carbon precursor together with a catalyst, thereby forming a mixture with said silicon-containing particles and said catalyst dispersed in said carbon precursor; and carbonizing said mixture.

# Fig.1

# Fig.2

(A)

(B)

<div align="center">

**INTERNATIONAL SEARCH REPORT**

</div>

| | International application No. |
|---|---|
| | PCT/JP2009/066038 |

**A. CLASSIFICATION OF SUBJECT MATTER**
*H01M4/58*(2006.01)i, *H01M4/36*(2006.01)i, *H01M4/38*(2006.01)i, *H01M4/48* (2006.01)i

According to International Patent Classification (IPC) or to both national classification and IPC

**B. FIELDS SEARCHED**

Minimum documentation searched (classification system followed by classification symbols)
H01M4/58, H01M4/36, H01M4/38, H01M4/48

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2009 |
| Kokai Jitsuyo Shinan Koho | 1971–2009 | Toroku Jitsuyo Shinan Koho | 1994–2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2007-214137 A (Mitsubishi Chemical Corp.), 23 August 2007 (23.08.2007), claim 1; paragraphs [0012] to [0021] (Family: none) | 1-12<br>13 |
| X<br>A | JP 2007-220411 A (Kuraray Co., Ltd.), 30 August 2007 (30.08.2007), claims 1 to 17; examples (Family: none) | 1-7,10-12<br>8,9,13 |
| A | JP 2004-119176 A (Toshiba Corp.), 15 April 2004 (15.04.2004), claims 1, 2; examples & US 2004/115535 A1 & CN 1492533 A | 1-13 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 December, 2009 (01.12.09) | 08 December, 2009 (08.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| | International application No. |
|---|---|
| | PCT/JP2009/066038 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-165108 A  (Hitachi Maxell, Ltd.),<br>28 June 2007 (28.06.2007),<br>claims 1 to 4; examples<br>(Family: none) | 1-13 |
| A | JP 2006-244984 A  (Matsushita Electric<br>Industrial Co., Ltd.),<br>14 September 2006 (14.09.2006),<br>claims 1 to 20; examples<br>& US 2008/160409 A1    & WO 2006/22254 A1<br>& KR 10-2007/26699 A    & CN 1965428 A | 1-13 |
| A | JP 2005-243640 A  (Samsung SDI Co., Ltd.),<br>08 September 2005 (08.09.2005),<br>claims 1 to 32; examples<br>& US 2005/186475 A1    & KR 10-2005/87147 A<br>& CN 1661833 A | 1-13 |
| A | JP 2004-327190 A  (Shin-Etsu Chemical Co.,<br>Ltd.),<br>18 November 2004 (18.11.2004),<br>claims 1 to 8; examples<br>(Family: none) | 1-13 |
| A | JP 2008-166013 A  (Matsushita Electric<br>Industrial Co., Ltd.),<br>17 July 2008 (17.07.2008),<br>claims 1 to 4; examples<br>(Family: none) | 1-13 |
| A | JP 2007-227139 A  (Matsushita Electric<br>Industrial Co., Ltd.),<br>06 September 2007 (06.09.2007),<br>claims 1 to 8; examples<br>(Family: none) | 1-13 |
| A | JP 8-241715 A  (Central Glass Co., Ltd.),<br>17 September 1996 (17.09.1996),<br>entire text<br>(Family: none) | 1-13 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007214137 A
- JP 2007305569 A
- JP H08241715 B